# EUROPÄISCHE PATENTSCHRIFT

(11) **EP 2 485 911 B1**
(45) Veröffentlichungstag und Bekanntmachung des Hinweises auf die Patenterteilung: **18.09.2013**
(21) Anmeldenummer: 10768360.9
(22) Anmeldetag: 05.10.2010
(51) Int. Cl.: B60K 17/04

(54) **UMLENKGETRIEBE**
REDIRECTING TRANSMISSION
BOITE INVERSEUSE

(30) Priorität: 07.10.2009 AT 15862009
(43) Veröffentlichungstag der Anmeldung: 15.08.2012
(73) Patentinhaber: Oberaigner, Wilhelm, 4150 Rohrbach (AT)
(72) Erfinder: Oberaigner, Wilhelm, 4150 Rohrbach (AT)
(74) Vertreter: Wildhack & Jellinek
(86) Internationale Anmeldenummer: PCT/AT2010/000370
(87) Internationale Veröffentlichungsnummer: WO 2011/041810

(56) Entgegenhaltungen:
- WO-A1-03/106247
- FR-A1- 2 619 767
- GB-A- 2 174 342
- US-A- 5 634 863

## Beschreibung

Die Erfindung betrifft ein Umlenkgetriebe für ein heckgetriebenes, mit Frontmotor ausgestattetes Fahrzeug, welches Umlenkgetriebe zum Einbau zwischen ein an den Motor angeschlossenes Getriebe und eine Kardanwelle vorgesehen ist, sowie ein heckgetriebenes Kraftfahrzeug mit Frontmotor gemäß dem Oberbegriff des Patentanspruches 6.

Dokument W03/106247 A1 stellt den nächsten Stand der Technik der und offenbart die Preamble des Anspruchs 1

Heckgetriebene Fahrzeuge mit Frontmotor leiten das Antriebsmoment für die Hinterräder mit Hilfe einer Kardanwelle zur Hinterradachse bzw. einem dort befindlichen Hinterachsgetriebe weiter, wobei die Kardanwelle an der Ausgangswelle des Fahrzeuggetriebes angeflanscht ist. Durch die Lage des Abtriebflansches des Getriebes und des Eintriebflansches an der Hinterradachse einerseits, sowie durch das zu übertragende Drehmoment und dem von der Kardanwelle ertragbaren Knickungs- bzw. Schwenkwinkel anderseits, ist der Verlauf der Kardanwelle festgelegt.

Der Fahrzeugboden liegt oberhalb der Kardanwelle. Insbesondere bei Sonderanwendungen, beispielsweise Niederflurbussen od. dgl., ist oft ein Tieferlegen des Fahrzeugsbodens sinnvoll und erforderlich. Hiezu werden Umlenkgetriebe eingesetzt, welche in der Regel direkt an den Abtrieb des vorgesehenen Fahrzeuggetriebes angeflanscht werden. Der Ausgang derartiger Getriebe ist auf einem tieferen Niveau angebracht als der Eintrieb und damit liegt eine an ein derartiges Umlenkgetriebe angeflanschte Kardanwelle auf einem tieferen Niveau.

Wird das Umlenkgetriebe direkt an das vorhandene Fahrzeuggetriebe angeflanscht, so hat die Ausgangswelle dieses Umlenkgetriebes die selbe Neigung wie die Folge Motorabtriebswelle-Getriebeabtriebswelle-Eingangswelle des Umlenkgetriebes, welche Neigung derart ist, dass die Achsen der Wellen im Wesentlichen auf die Hinterradachse des Fahrzeugs, die über die Kardanwelle angetrieben ist, ausgerichtet ist.

Aufgabe der Erfindung ist es, ein einfach aufgebautes Umlenkgetriebe vorzusehen, das es ermöglicht, die Kardanwelle tiefer zu legen, wobei der vorhandene Neigungswinkel des Motor-Getriebeblockes zur horizontalen bzw. Aufstands-Ebene unverändert bleibt bzw. gleichgehalten werden kann.

Erfindungsgemäß wird diese Aufgabe bei einem Umlenkgetriebe der eingangs genannten Art dadurch gelöst, dass das Umlenkgetriebe als Dreiwellengetriebe ausgebildet ist, wobei die Eingangswelle zu der bezüglich der Eingangswelle auf der gegenüberliegenden Seite des Umlenkgetriebes abgehenden Ausgangswelle geneigt verläuft und diese beiden Wellen miteinander einen einen auf der Seite der Ausgangswelle gelegenen Scheitel besitzenden Winkel von 2 bis 6°, vorzugsweise 3 bis 5°, insbesondere etwa 4°, einschließen.

Der Winkel, den die Motor-Getriebe-Achse mit der Aufstandsebene einschließt, wird durch Einsatz des erfindungsgemäßen Umlenkgetriebe dadurch kompensiert, dass in dem Drei-Wellengetriebe Konusverzahnungen und / oder konische Verzahnungen vorgesehen sind, wobei sich in beiden Zahneingriffen die Achsen der jeweils beteiligten zwei Verzahnungen bzw. Zahnräder jeweils in einem, gegebenenfalls dem selben, Punkt schneiden und/oder dass die Achswinkel der vorhandenen drei Verzahnungen bzw. Zahnräder derart gewählt sind, dass in Gebrauchs- bzw. Einbaulage, die von dem Umlenkgetriebe abgehende Ausgangswelle parallel zur Fahrbahn bzw. zur Aufstandebene des Fahrzeuges verläuft. Die erzielten wesentlichen Vorteile liegen in der Laufruhe der Kardanwelle und einer beträchtlich verlängerten Lebensdauer der Kardangelenke, da Drehungleichförmigkeiten der Kardanwelle nahezu vollständig vermieden werden.

Konuszahnräder und / oder konische Verzahnungen lassen sich analog zu zylindrischen Stirnrädern auf gängigen Verzahnungsmaschinen fertigen.

Es besteht der weitere Vorteil, dass derartige Umlenkgetriebe in einfacher Weise an bestehende Getriebe von Fahrzeugen angeschlossen werden könne, ohne das wesentliche Umbauten vorgenommen werden müssen.

Es ergibt sich der Vorteil, dass das Zahnrad bzw. die Verzahnung der Eingangswelle mit einer von ihr angetriebenen Mittelwelle und das Zahnrad bzw. die Verzahnung dieser Mittelwelle mit dem Zahnrad bzw. der Verzahnung der Ausgangswelle gleich ausgebildet sein können, sodass vom Aufbau und der Herstellung der einzusetzenden Bauteile her Vorteile erreicht werden.

Im Allgemeinen wird die Verzahnung des mittleren Zahnrades nicht identisch mit der ersten bzw. dritten Verzahnung ausgeführt. Das liegt vor allem an der unterschiedlichen Zähnezahl sowie daran, dass im Falle eine Schrägverzahnung ein anderes Vorzeichen des Schrägungswinkels erforderlich wäre. Falls die jeweiligen Achswinkel zur Achse des mittleren Zahnrads gleich ausgeführt werden, dann können das erste und das dritte Zahnrad mit gleichen Verzahnungsdaten ausgeführt werden.

Eine besonders einfach aufgebaute und kostengünstig erstellbare Ausführungsform eines Umlenkgetriebes ergibt sich, wenn die jeweiligen Rotationsebenen der von der Eingangswelle und der Mittelwelle und der von der Mittelwelle und der Ausgangswelle getragenen Verzahnungen jeweils um die Hälfte des Winkels zueinander geneigt sind, den die Eingangswelle und die Ausgangswelle miteinander einschließen.

Da die Eingangswelle des Umlenkgetriebes an die Getriebeabgangswelle des Fahrzeuggetriebes angeschlossen ist und die bezüglich der Eingangswelle tiefer liegende Ausgangswelle auf der Höhe der Eingangswelle des Hinterachsgetriebes der Hinterradachse gelegen ist, verläuft die Kardanwelle im Wesentlichen horizontal bzw. parallel zur Fahrbahnebene bzw. zur Aufstandsebene des Fahrzeuges ausgerichtet bzw. liegt auf dem Niveau der Vorderradachse und der Hinterradachse.

Die Achsabstände der Eingangswelle und der Ausgangswelle des Umlenkgetriebes ergeben sich durch das Ausmaß, um das die Kardanwelle tiefergelegt werden soll.

Die Erfindung betrifft des weiteren ein heckgetriebenes Fahrzeug, bei dem die vom Frontmotor angetriebene Abgangswelle des Fahrzeuggetriebes zur Horizontalen bzw. zur Fahrbahnebene bzw. zur Aufstandsebene des Fahrzeugs in Richtung der angetriebenen Hinterradachse nach unten zu geneigt verläuft, insbesondere in einem Winkel von 2 bis 6°, vorzugsweise von 3 bis 5°, insbesondere etwa 4°, geneigt verläuft, und eine zum Ausgleichsgetriebe der Hinterradachse geführte Kardanwelle antreibt. Erfindungsgemäß ist vorgesehen, dass zwischen das Fahrzeuggetriebe bzw. die Getriebeabgangswelle und die Kardanwelle ein Umlenkgetriebe der erfindungsgemäßen Bauart eingeschaltet ist.

Von Vorteil ist es, wenn die Getriebeabgangswelle und die Eingangswelle sowie die Ausgangswelle und die Kardanwelle jeweils fluchtend ausgerichtet sind.

Die Montage des Umlenkgetriebes in einem Fahrzeug erfolgt insbesondere dann einfach, wenn die Eingangswelle des Umlenkgetriebes auf die Abtriebswelle des Fahrzeuggetriebes aufgesteckt werden kann. Es ist allerdings auch denkbar, dass die Kraftübertragung über entsprechende Zahnräder oder Zahnketten erfolgt.

Die Eingangswelle des Achsgetriebes, das sich an der angetriebenen Hinterradachse des Fahrzeuges befindet, ist auf die Ausgangswelle des Umlenkgetriebes ausgerichtet, sodass diese beiden Anschlüsse einander auf dem selben Niveau gegenüberliegend bzw. zueinander ausgerichtet zu liegen kommen, sodass lediglich die Kardanwelle eingesetzt werden muss.

Im Folgenden wird ein Ausführungsbeispiel eines erfindungsgemäßen Umlenkgetriebes und eines mit einem derartigen Umlenkgetriebe versehenen Fahrzeuges beispielsweise näher erläutert.
Fig. 1 zeigt schematisch eine Anordnung eines erfindungsgemäßen Umlenkgetriebes in einem Kraftfahrzeug.
Fig. 2 zeigt einen Schnitt durch ein erfindungsgemäßes Umlenkgetriebe.

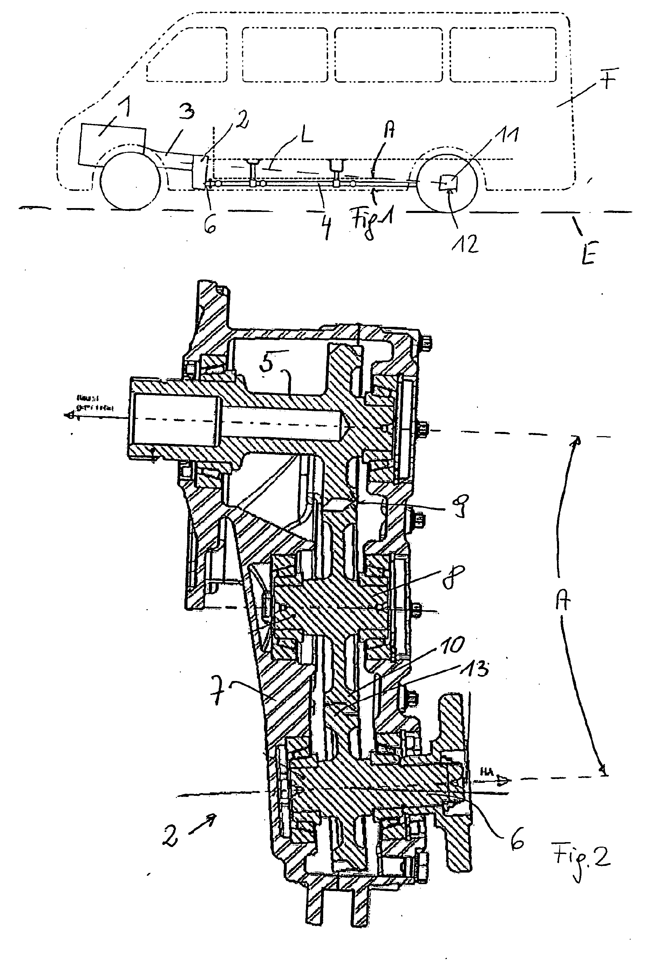

Fig. 1 zeigt ein Fahrzeug F mit einem Frontmotor 1, der über ein Gebtriebe 3 mit einem erfindungsgemäßen Umlenkgetriebe 2 verbunden ist. In ihrem unteren, der Hinterradachse des Fahrzeugs zugewandten Bereich ist die Ausgangswelle 6 des Umlenkgetriebes 2 mit einer Kardanwelle 4 verbunden, welche das Hinterachsgetriebe 11 einer Hinterradachse 12 antreibt.

Die Abtriebswelle des Motors 1 bzw. die Eingangs- und Ausgangswelle des Getriebes 3 sind zueinander fluchtend angeordnet und längs der Linie L auf die Hinterradachse 12 bzw. das Hinterachsgetriebe 11 ausgerichtet.

Sofern die Kardanwelle 4 nicht in dieser Linie L angeordnet werden soll, sondern tiefergelegt werden soll, kann dies in einem Ausmaß erfolgen, das durch den Abstand der Eingangswelle 5 (Fig. 2) des Umlenkgetriebes 2 und der Ausgangswelle 6 dieses Umlenkgetriebes 2 bestimmt ist.

Der spitze Winkel zwischen der Linie L und der Aufstandsebene des Fahrzeuges F, der zu kompensieren ist, beträgt in der Regel 2 bis 6°. Je nach dem auszugleichenden Winkel werden der Abstand und/oder der Winkel zwischen der Eingangswelle 5 und der Ausgangswelle 6 des Umlenkgetriebes 2 gewählt.

Das in Fig. 2 dargestellte Umlenkgetriebe umfasst ein Gehäuse 7, in dem drei Wellen, das heißt eine Eingangswelle 5, eine Mittelwelle 8 und eine Abtriebswelle bzw. Ausgangswelle 6 gelagert sind. Jeweils zwei Wellen kämmen miteinander mit entsprechenden Verzahnungen 9, 10, 13. Aufgrund der vorgesehenen Mittelwelle 8 ist die Drehrichtung der Eingangswelle 5 gleich zur Drehrichtung der Ausgangswelle 6.

Die Neigungen der Achsen der Eingangswelle 5 und der Ausgangswelle 6 sind nunmehr derart, dass sie auf der Seite des Gehäuses 7 des Umlenkgetriebes, von der die Ausgangswelle 6 abgeht, einen Winkel einschließen, welcher Winkel dem bei der Tieferlegung der Kardanwelle 4 zu kompensierenden Winkel A entspricht.

Prinzipiell könnte auch vorgesehen sein, dass die Mittelwelle 8 eine Verzahnung 10 trägt, die mit der Verzahnung 9 der Eingangswelle kämmt, ohne dass die Rotationsachsen der Verzahnungen der beiden Wellen einen Winkel miteinander einschließen. In diesem Fall müsste die Mittelwelle einen weitere Konusverzahnung tragen, die unter dem zu kompensierenden Winkel zur Rotationsachse geneigt ist und mit einer entsprechend angepassten konischen Verzahnung 13 der Ausgangswelle 6 kämmt. In umgekehrter Weise, wäre es auch möglich, dass die Rotationsebene der Verzahnungen 10, 13 der Wellen 8 und 6 parallel zueinander verlaufen, sodass zum Ausgleich des Winkels wiederum die Mittelwelle 8 eine weitere Verzahnung tragen müsste, die eine entsprechende kegelige Neigung besitzt, um mit einem einer entsprechend angepasste kegelige Neigung aufweisend Verzahnung zu kämmen, die auf der Eingangswelle 5 angeordnet ist.

Von beträchtlichen Vorteil ist es, wenn die Verzahnung 9 der Eingangswelle 5 mit einer von ihr angetriebenen Mittelwelle 8 und die Verzahnung 10 dieser Mittelwelle 8 mit der Verzahnung 13 der Ausgangswelle 6 gleich ausgebildet sind bzw. wenn die jeweiligen Rotationsebenen der von der Eingangswelle 5 und der Mittelwelle 8 und der von der Mittelwelle 8 und der Ausgangswelle 6 getragenen Verzahnungen 9, 10, 13 jeweils um die Hälfte des Winkels A zueinander geneigt sind, den die Eingangswelle 5 und die Ausgangswelle 6 miteinander einschließen.

Damit erreicht man den großen herstellungsmäßigen Vorteil, dass die Verzahnungen 9, 10, die von den Wellen 5 und 6 getragen werden, gleich ausgebildet sein können.

Das erfindungsgemäße Umlenkgetriebe 2 wird vorteilhafter Weise auf die Abtriebswelle des Fahrzeuggetriebes drehfest aufgesteckt. In gleicher Weise kann eine Verbindung des Abtriebsflansches der Ausgangswelle 6 mit dem Anschlussflansch der Kardanwelle 4 erfolgen.

Die Achsen von zwei im Eingriff befindlichen konischen Stirnrädern können prinzipiell parallel verlaufen, sich in einem Punkt unter einem gewissen Achswinkel schneiden oder auch gekreuzt, d.h. windschief, verlaufen. Die Summe der beiden Achswinkel ergibt den spitzen Winkel A, den die Eingangswelle 5 und die Ausgangswelle 6 einschließen.

Für den Einsatzzweck im erfindungsgemäßen Getriebe eignet sich vor allem die Variante, bei der die Achsen der Zahneingriffe von jeweils zwei Zahnrädern 9, 10 bzw. 10, 13 sich in einem Punkt schneiden. Falls gleiche Winkel zur Mittelwelle 8 gewählt werden, fallen die Schnittpunkte der Achsen der beiden Zahneingriffe, d.h. der des oberen Zahnrades 9 mit dem mittleren Zahnrad 10 bzw. der des mittleren Zahnrades 10 mit dem unteren Zahnrad 13, zusammen. Andernfalls ergeben sich zwei verschiedene Schnittpunkte.

Für unter kleinen Achswinkeln schneidende Achsen werden sogenannte konische Stirnräder und/oder Konusverzahnungen verwendet. Diese sind von normalen Stimradverzahnungen abgeleitet. Bei diesen Verzahnungen ist die Profilverschiebung über die Zahnbreite veränderlich, sodass eine konische Grundform entsteht.

Einander schneidende Achsen lassen sich prinzipiell auch mit Kegelradverzahnungen darstellen, bei kleinen Achswinkeln sind aber konische Stirnräder vorteilhafter, weil sie einfacher, zu niedrigeren Kosten und auf gängigen Verzahnungsmaschinen herstellbar sind.

Bevorzugt ist es, wenn die jeweiligen Rotationsebenen der von der Eingangswelle 5 und der Mittelwelle 8 und der von der Ausgangswelle 6 getragenen Verzahnungen 9, 10, 13 jeweils zueinander um die Hälfte des Winkels A geneigt sind, den die Eingangswelle 5 und die Ausgangswelle 6 miteinander einschließen, und/oder dass die Verzahnungen 9, 10, 13 bezüglich ihrer Rotationsachse konisch geformt sind, wobei der Winkel der Konizität 1 ° bis 3°, vorzugsweise 1,5° bis 2,5°, insbesondere etwa 2° beträgt.

## Patentansprüche

1. Umlenkgetriebe für ein heckgetriebenes, mit Frontmotor (1) ausgestattetes Fahrzeug, welches Umlenkgetriebe (2) mit enem Gehäuse (7) zum Einbau zwischen ein an den Motor angeschlossenes Getriebe (3) und eine Kardanwelle (4) vorgesehen ist, **dadurch gekennzeichnet,**
- **dass** das Umlenkgetriebe als Dreiwellengetriebe mit Eingangswelle, Ausganswelle und Mittelwelle ausgebildet ist, wobei die Eingangswelle (5) zu der bezüglich dieser Eingangswelle (5) von der entgegengesetzten bzw. gegenüberliegenden Seite des Umlenkgetriebes abgehenden Ausgangswelle (6) geneigt verläuft und die Achsen dieser beiden Wellen (5, 6) einen auf der Seite der Ausgangswelle (6) gelegenen spitzen Winkel (A) von 2 bis 6°, vorzugsweise 3 bis 5°, insbesondere etwa 4°, einschließen.

2. Umlenkgetriebe nach Anspruch 1, **dadurch gekennzeichnet, dass** in dem DreiWellengetriebe als Verzahnungen Konusverzahnungen und/oder konische Verzahnungen vorgesehen sind, wobei sich in den beiden Zahneingriffen die Achsen der jeweils beteiligten zwei Verzahnungen bzw. Zahnräder (9, 10, 13) jeweils in einem, gegebenenfalls dem selben, Punkt schneiden und/oder dass die Achswinkel der drei Verzahnungen bzw. Zahnräder (9, 10, 13) derart gewählt sind, dass in Gebrauchs- bzw. Einbaulage, die von dem Umlenkgetriebe (2) abgehende Ausgangswelle (6) parallel zur Fahrbahn bzw. zur Aufstandebene (E) des Fahrzeuges (F) verläuft.

3. Umlenkgetriebe nach Anspruch 1 oder 2, **dadurch gekennzeichnet, dass** die jeweiligen Rotationsebenen der von der Eingangswelle (5) und der Mittelwelle (8) und der von der Ausgangswelle (6) getragenen Verzahnungen (9, 10, 13) jeweils zueinander um die Hälfte des Winkels (A) geneigt sind, den die Eingangswelle (5) und die Ausgangswelle (6) miteinander einschließen, und/oder dass die Verzahnungen (9, 10, 13) bezüglich ihrer Rotationsachse konisch geformt sind, wobei der Winkel der Konizität 1° bis 3°, vorzugsweise 1,5° bis 2,5°, insbesondere etwa 2° beträgt.

4. Umlenkgetriebe nach einem der Ansprüche 1 bis 3, **dadurch gekennzeichnet, dass** die Achsen der Eingangswelle (5), der Mittelwelle (8) und der Ausgangswelle (6) in einer Ebene ausgerichtet übereinander, insbesondere in Betriebsstellung vertikal übereinander, im Gehäuse (7) des Umlenkgetriebes (2) gelagert sind.

5. Umlenkgetriebe nach einem der Ansprüche 1 bis 4, **dadurch gekennzeichnet, dass** die Eingangswelle (5) im Gehäuse (7) zu oberst gelagert ist.

6. Heckgetriebenes Kraftfahrzeug mit Frontmotor, wobei die vom Frontmotor (1) angetriebene Abgangswelle des Fahrzeuggetriebes (3) bezogen auf eine Horizontale bzw. eine Fahrbahnebene bzw. eine Aufstandsebene (E) des Fahrzeugs in Richtung der angetriebenen Hinterradachse nach unten zu geneigt verläuft, insbesondere in einem Winkel von 2 bis 6°, vorzugsweise von 3 bis 5°, insbesondere etwa 4°, geneigt verläuft, und eine zum Hinterachsgetriebe (11) einer Hinterradachse (12) geführte Kardanwelle (4) antreibt, **dadurch gekennzeichnet,**
- **dass** zwischen das Fahrzeuggetriebe (3) bzw. die Getriebeabgangswelle und die Kardanwelle (4) das Umlenkgetriebe (2) gemäß einem der Ansprüche 1 bis 5 eingeschaltet ist.

7. Fahrzeug nach Anspruch 6, **dadurch gekennzeichnet, dass** die Eingangswelle (5) an die Getriebeabgangswelle, insbesondere fluchtend, angeschlossen ist und die bezüglich der Eingangswelle (5) des Umlenkgetriebes (2) tiefer liegende Ausgangswelle (6) auf der Höhe der Eingangswelle des Hinterachsgetriebes (11) gelegen ist, sodass die Achse der Ausgangswelle (6) und die Kardanwelle (4) im Wesentlichen horizontal bzw. parallel zur Fahrbahnebene bzw. zur Aufstandsebene (E) des Fahrzeuges (F) ausgerichtet verlaufen bzw. auf dem Niveau der Vorderradachse und der Hinterradachse (12) liegen.

8. Fahrzeug nach Anspruch 6 oder 7, **dadurch gekennzeichnet, dass** der Scheitel des Winkels (A) zwischen der Abgangswelle des Fahrzeuggetriebes (3) bzw. der Eingangswelle (5) des Umlenkgetriebes (2) und der Kardanwelle (4) bzw. der Ausgangswelle (6) des Umlenkgetriebes (2) in der angetriebenen Hinterradsachse (12) liegt oder dass die Achse der Ausgangswelle (6) und die Achse der Eingangswelle (5) des Umlenkgetriebes (2) auf die Eingangswelle des Hinterachsgetriebes (11) ausgerichtet sind.

9. Fahrzeug nach einem der Ansprüche 6 bis 8, **dadurch gekennzeichnet, dass** die Abgangswelle des Fahrzeuggetriebes (3) und die Eingangswelle (5) sowie die Ausgangswelle (6) und die Kardanwelle (4) jeweils fluchtend ausgerichtet sind.

10. Fahrzeug nach einem der Ansprüche 6 bis 9, **dadurch gekennzeichnet, dass** die Achsen der Eingangswelle (5), der Mittelwelle (8) und der Ausgangswelle (6) in einer Ebene ausgerichtet übereinander, in Betriebsstellung insbesondere vertikal übereinander, im Gehäuse (7) gelagert sind, wobei die Eingangswelle (5) im Gehäuse (7) zu oberst gelagert ist.

## Claims

1. A redirecting transmission for a rear-wheel-drive vehicle equipped with a front engine (1), which redirecting transmission (2) is provided with a housing (7) to be installed between a transmission (3) connected to said engine and a Cardan shaft (4), **characterised in that**
said redirecting transmission is provided as a three-shaft transmission including an input shaft, an output shaft and an intermediate shaft, wherein said input shaft (5) is inclined towards said output shaft (6) extending from a side opposing and/or opposite said redirecting transmission relative to said input shaft (5), and the axes of said two shafts (5, 6) create an acute angle (A) of 2 to 6°, preferably 3 to 5°, in particular about 4°, located on the side of saidoutput shaft (6).

2. The redirecting transmission of Claim 1, **characterised in that** taper teeth and/or tapered teeth are provided as gearings in said three-shaft transmission, wherein, in the two tooth engagements, the axes of a pair of teeth and/or cogwheels (9, 10, 13) involved each intersect in one, optionally the same, intersection point, and/or **in that** the shaft angles of the three teeth and/or cogwheels (9, 10, 13) are selected such that in an operating and/or installation position, the output shaft (6) extending from the redirecting transmission (2) is parallel to the road and/or to the support plane (E) of the vehicle (F).

3. The redirecting transmission of Claim 1 or 2, **characterised in that** each plane of rotation of the gearings (9, 10, 13) supported by said input shaft (5) and said intermediate shaft (8) and by said output shaft (6) are each inclined towards each other by half the angle (A) created by said input (5) and output (6) shafts, and/or **in that** the gearings (9, 10, 13) are tapered regarding their axis of rotation, wherein the angle of said taper is 1 ° to 3°, preferably 1.5° to 2.5°, in particular about 2°.

4. The redirecting transmission of any one of Claims 1 to 3, **characterised in that** the axes of said input shaft (5), said intermediate shaft (8) and said output shaft (6) are borne within said housing (7) of said redirecting transmission (2), aligned in one plane on top of each other, in particular vertically superimposed when in an operating position.

5. The redirecting transmission of any one of Claims 1 to 4, **characterised in that** said input shaft (5) is placed on the very top within said housing (7).

6. Rear-wheel-drive motor vehicle having a front engine, wherein the output shaft driven by the front engine (1) of the vehicle transmission (3) is inclined downwards relative to a horizontal and/or road plane and/or support plane (E) of said vehicle in the direction of the power-driven rear axis, in particular at an angle of 2 to 6°, preferably 3 to 5°, in particular about 4°, thus diving a Cardan shaft (4) leading to the rear-axis transmission (11) of one rear axis (12), **characterised in that**
the redirecting transmission (2) of any one of Claims 1 to 5 is interposed between said vehicle transmission (3) and/or the transmission output shaft and said Cardan shaft (4).

7. The vehicle of Claim 6, **characterised in that** said input shaft (5) is connected to said transmission output shaft, in particular in an aligning manner, and said output shaft (6) provided on a lower level compared to said input shaft (5) of said redirecting transmission (2) is located on the level of the input shaft (5) of said rear-axis transmission (11) such that the axis of said output shaft (6) and said Cardan shaft (4) are essentially horizontal and/or parallel to road level and/or to the support plane (E) of the vehicle (F), and/or are located on the level of a front-wheel axis and said rear-wheel axis (12).

8. The vehicle of Claim 6 or 7, **characterised in that** the apex of said angle (A) between said output shaft of said vehicle transmission (3) and/or said input shaft (5) of said redirecting transmission (2) and said Cardan shaft (4) and/or said output shaft (6) of said redirecting transmission (2) is located within the power-driven rear axis (12) or **in that** the axis of said output shaft (6) and the axis of said input shaft (5) of said redirecting transmission (2) are oriented towards said input shaft of said rear-axis transmission (11).

9. The vehicle of any of Claims 6 to 8, **characterised in that** said output shaft of said vehicle transmission (3) and said input shaft (5) as well as said output shaft (6) and said Cardan shaft (4) are each arranged in an aligning manner.

10. The vehicle of any one of Claims 6 to 9, **characterised in that** the axes of said input shaft (5), said intermediate shaft (8) and said output shaft (6) are borne within said housing (7), arranged in one plane on top of each other, in particular vertically superimposed when in an operating position, wherein said input shaft (5) is placed on the very top within said housing (7).

## Revendications

1. Transmission de renvoi pour un véhicule à traction arrière doté d'un moteur (1) à l'avant, ladite transmission de renvoi étant prévue avec un carter (7) pour être inséré entre une transmission (3) reliée au moteur et un arbre (4) de cardan, **caractérisé en ce que**
- la transmission de renvoi est formé comme transmission à trois arbres, avec arbre d'entrée, arbre de sortie et arbre central, l'arbre d'entrée (5) étant oblique par rapport à l'arbre de sortie (6) s'étendant à partir du côté de ladite transmission de renvoi opposé à ou en face de l'arbre d'entrée, et **en ce que** les axes desdites deux arbres (5, 6) comprennent un angle aigu (A) de 2 à 6 °, depréférence de 3 à 5 °, notamment d'environ 4 °, présent sur le côté de l'arbre de sortie.

2. Transmission de renvoi selon la revendication 1, **caractérisée en ce que** dans la transmission à trois arbres sont prévu comme dentures des dentures coniques, les axes des deux dentures ou roues dentées (9, 10, 13) impliquées se coupant dans les deux engrènements respectivement dans un point d'intersection, éventuellement le même, et/ou **en ce que** les angles axiales des trois dentures ou roues dentées (9, 10, 13) sont choisies de telle manière à ce que l'arbre de sortie (6) s'étendant à partir de la transmission (2) de renvoi est disposé parallèlement à la voie ou au plan de support (E) du véhicule (F) dans la position d'utilisation ou de montage.

3. Transmission de renvoi selon la revendication 1 ou 2, **caractérisée en ce que** les plans de rotation respectives des dentures (9, 10, 13) supportées par de l'arbre d'entrée (5) et par l'arbre central (8) ainsi que par l'arbre de sortie (6) sont disposés les uns face aux autres de la moitié d'un angle (A) formé par l'arbre d'entré (5) et l'arbre de sortie (6), et/ou **en ce que** les dentures (9, 19, 13) présentent une forme conique par rapport de leur axe de rotation, l'angle de conicité étant de 1 à 3 °, de préférence de 1,5 à 2,5 °, notamment d'environ 2 °.

4. Transmission de renvoi selon une des revendications 1 à 3, **caractérisée en ce que** les axes de l'arbre d'entrée (5), de l'arbre central (8) et de l'arbre de sortie (6) sont disposés alignés dans un plan l'un sur l'autre, notamment en position d'utilisation verticalement l'un sur l'autre, dans le carter (7) de la transmission (2) de renvoi.

5. Transmission de renvoi selon une des revendications 1 à 4, **caractérisée en ce que** l'arbre d'entrée (5) est disposé tout en haut dans le carter (7).

6. Véhicule à traction arrière avec moteur à l'avant, l'arbre de sortie de la transmission (3) du véhicule, actionné par le moteur (1) à l'avant, étant disposé en direction de l'axe de la roue d'arrière actionné et vers le bas par rapport à une horizontale ou un plan de support (E) du véhicule, notamment d'un angle de 2 à 6 °, de préférence de 3 à 5 °, notamment d'environ 4 °,et actionnant un arbre (4) de cardan guidé vers la transmission (11) de roue d'arrière d'un axe (12) de roue d'arrière, **caractérisé en ce que**
- la transmission (2) de renvoi selon une des revendications 1 à 5 est montée entre la transmission (3) du véhicule ou l'arbre de sortie de transmission et l'arbre (4) de cardan.

7. Véhicule selon la revendication 6, **caractérisé en ce que** l'arbre d'entrée (5) est raccordé, notamment de façon alignée, à l'arbre de sortie de transmission et **en ce que** l'arbre de sortie (6), plus en bas par rapport à l'arbre (5) d'entrée de la transmission (2) de renvoi, est disposé à la hauteur de l'arbre d'entrée de la transmission (11) de l'axe arrière, de manière à ce que l'axe de l'arbre de sortie (6) et l'arbre (4) de cardan sont disposés essentiellement horizontalement ou parallèlement au plan de voie ou au plan de support (E) du véhicule (F) ou se trouvent au niveau de l'axe de la roue d'avant et de l'axe (12) de la roue d'arrière.

8. Véhicule selon la revendication 6 ou 7, **caractérisé en ce que** le sommet de l'angle (A) entre l'arbre de sortie de la transmission (3) du véhicule ou l'arbre d'entrée (5) de la transmission (2) de renvoi et l'arbre (4) de cardan ou l'arbre de sortie (6) de la transmission (2) de renvoi est disposé dans l'axe (12) de la roue d'arrière actionné ou **en ce que** l'axe de l'arbre de sortie (6) et l'axe de l'arbre d'entrée (5) de la transmission (2) à renvoi sont orientés vers l'arbre d'entrée de la transmission (11) de l'axe derrière.

9. Véhicule selon une des revendications 6 à 8, **caractérisé en ce que** l'arbre de sortie de la transmission (3) du véhicule et l'arbre d'entrée (5) ainsi que l'arbre de sortie (6) et l'arbre (4) de cardan sont respectivement disposées de manière alignée.

10. Véhicule selon une des revendications 6 à 9, **caractérisé en ce que** les axes de l'arbre d'entrée (5), de l'arbre central (8) et de l'arbre de sortie (6) sont disposés alignés dans un plan l'un sur l'autre, notamment en position d'utilisation verticalement l'un sur l'autre, dans le carter (7), l'arbre d'entrée (5) étant disposé tout en haut dans le carter (7).
